# EUROPEAN PATENT APPLICATION

(11) **EP 4 365 149 A1**
(43) Date of publication of application: **08.05.2024**
(21) Application number: 22897218.8
(22) Date of filing: 04.08.2022
(51) Int. Cl.: C04B 35/38, C04B 35/26, C04B 35/622, H01F 1/34, H01F 41/02

(54) **WIDE-TEMPERATURE LOW-LOSS HIGH-STRENGTH MNZN POWER FERRITE, AND PREPARATION METHOD THEREFOR AND USE THEREOF**

(30) Priority: 26.11.2021 CN 202111420511
(71) Applicant: Hengdian Group DMEGC Magnetics Co., Ltd., Jinhua, Zhejiang 322118 (CN)
(72) Inventor: ZHANG, Xiaohang, Jinhua, Zhejiang 322118 (CN); LV, Feiyu, Jinhua, Zhejiang 322118 (CN)
(74) Representative: Cabinet Beaumont
(86) International application number: PCT/CN2022/110189
(87) International publication number: WO 2023/093123

(57) **Abstract**

A wide-temperature low-loss high-strength MnZn power ferrite, and a preparation method therefor and the use thereof. The wide-temperature low-loss high-strength MnZn power ferrite is comprised of a main component and an auxiliary component, wherein the mass of the auxiliary component is 0.165-0.61 wt% of the main component; the main component comprises iron oxide, manganese oxide and zinc oxide; and the auxiliary component comprises a first auxiliary component and a second auxiliary component, the first auxiliary component being cobalt oxide, and the second auxiliary component comprising at least three of calcium carbonate, niobium oxide, vanadium oxide and molybdenum oxide. By means of adding the auxiliary component, especially adding cobalt oxide with a specific mass, the cooperative adjustment of the specific ratio of Fe²⁺ to Co²⁺ is achieved, and power consumption is ensured to be effectively reduced without being influenced by temperature changes, such that the prepared wide-temperature low-loss high-strength MnZn power ferrite can have, at 25-120°C, the characteristics of low loss, a high magnetic flux density and an increase in strength by 10% or more.

## Description

### TECHNICAL FIELD

Embodiments of the present application relate to the field of soft magnets, for example, a ferrite and a preparation method therefor and use thereof, and especially relate to a wide-temperature, low-loss and high-strength MnZn power ferrite, a preparation method therefor and use thereof.

### BACKGROUND

With the rapid development of electronic information industries such as communications, computers and networks, there is an increasingly demand growth of the high-performance soft magnetic ferrite. At present, the output of MnZn ferrite ranks first among the soft magnetic ferrite materials in industrialized production, accounting for more than 60%. The conventional MnZn ferrite material, which has been widely used in the communication and electronic fields, can no longer fully meet the requirements of electronics just by virtue of its low loss over a wide temperature range, especially, in the field of automotive electronics that require high strength. Therefore, how to improve the strength performance while maintaining the wide-temperature low loss of MnZn power ferrite to meet the comprehensive performance requirements of materials has become an urgent problem to be solved.

At present, by optimizing the composition formulation and adopting a suitable preparation method, the material can be improved to a certain extent in service temperature range and strength as well as loss reduction, but the control and enhancement of the comprehensive performance still needs a large number of experiments and improvements to be carried out.

CN107129291A discloses a preparation method for a MnZn soft magnetic ferrite material with high frequency, low temperature coefficient, and low loss. The material has 68-72wt% of Fe₂O₃, 5-9wt% of ZnO, and a remainder of MnO as a main component, and prepared through a primary ball milling, a primary sintering, a secondary proportioning, a secondary ball milling, a granulation, a press molding, a secondary sintering and other steps. The resulting MnZn soft magnetic ferrite material with high frequency, low temperature coefficient, and low loss can serve at a frequency of up to 5 Mz, and has high temperature stability and low power loss.

CN103496963A discloses a Ni-free MnZn power ferrite core having both high-temperature high Bs and wide-temperature low loss characteristics and a manufacturing method therefor. The ferrite core comprises a main component and an auxiliary component, and the main component includes 53-54 mol% of iron oxide as Fe₂O₃, 39-42 mol% of manganese oxide as MnO, and 4-7 mol% of zinc oxide as ZnO; the auxiliary component includes a first auxiliary component which is Co₂O₃ or CoO or Co₃O₄, a second auxiliary component which is SiO₂ and CaCOs, and a third auxiliary component which is selected from one or more of MoOs, TiO₂, SnO₂, Nb₂O₅, V₂O₅, Sm₂O₃, or ZrO₂. The resulting MnZn power ferrite core with dual characteristics has a loss per unit volume Pcv (100 kHz, 200 mT) of less than 350 kW/m³ over 25-120°C, with a minimum loss of less than 300 kW/m³ around 90°C.

CN107573051A discloses a method for improving the strength of MnZn power ferrite cores without increasing loss, wherein 200-400 ppm of CaCOs, 240-410 ppm of V₂O₅, and 100-200 ppm of ZrO₂ are added in the preparation of MnZn power ferrite, which can effectively increase the core strength.

Although the above technical solutions all have improved the performances of conventional power materials, the relevant performances cannot be comprehensively improved and enhanced. For example, the material in CN107129291A has a defect of insufficient control of loss and serving temperature range; the material in CN107573051A has a defect of insufficient strength; and in CN107573051A, no method is mentioned about how to improving the serving temperature range and reducing loss at the same time for the material.

Therefore, there is a need to provide a preparation method for a MnZn power ferrite, by which the resulting MnZn power ferrite can obtain high temperature stability and low power loss as well as high strength for use.

### SUMMARY

The following is a summary of the subject described in detail herein. The summary is not intended to limit the protection scope of the claims.

Embodiments of the present application provide a wide-temperature, low-loss and high-strength MnZn power ferrite, a preparation method therefor and use thereof; by the addition of auxiliary components in the specific mass, the prepared wide-temperature, low-loss and high-strength MnZn power ferrite is guaranteed to have not only low power consumption but also high strength performance over a wide temperature range.

In a first aspect, embodiments of the present application provide a wide-temperature, low-loss and high-strength MnZn power ferrite, and the wide-temperature, low-loss and high-strength MnZn power ferrite consists of a main component and an auxiliary component; and the auxiliary component relative to the main component is 0.165-0.61wt% by mass.

By molar percentage, the main component comprises Fe₂O₃: 51-54mol%, MnO: 35-38mol% and ZnO: 8-14mol%;
the auxiliary component comprises a first auxiliary component and a second auxiliary component; based on a total mass of the main component, the first auxiliary component is Co₂O₃: 0.1-0.4wt%; the second auxiliary component comprises at least three of CaCO₃, Nb₂O₅, V₂O₅ and MoO₃.

In the present application, by adjusting the composition of the MnZn power ferrite, the MnZn power ferrite is prepared which meets the low-loss and high-strength requirements of devices at 25-120°C conditions.

Specifically, the auxiliary component relative to the main component is 0.165-0.61wt% by mass, such as 0.165wt%, 0.17wt%, 0.2wt%, 0.25wt%, 0.3wt%, 0.35wt%, 0.4wt%, 0.45wt%, 0.5wt%, 0.55wt%, 0.6wt% or 0.61wt%; however, the amount is not limited to the listed values, other unlisted values within the numerical range are also applicable.

By molar percentage, Fe₂O₃ in the main component has a molar percentage of 51-54mol%, such as 51mol%, 51.5mol%, 52mol%, 52.5mol%, 53mol%, 53.5mol% or 54mol%; however, the molar percentage is not limited to the listed values, other unlisted values within the numerical range are also applicable; preferably, the molar percentage is 52-53mol%.

By molar percentage, MnO in the main component has a molar percentage of 35-38mol%, such as 35mol%, 35.5mol%, 36mol%, 36.5mol%, 37mol%, 37.5mol% or 38mol%; however, the molar percentage is not limited to the listed values, other unlisted values within the numerical range are also applicable; preferably, the molar percentage is 36-38mol%.

By molar percentage, ZnO in the main component has a molar percentage of 8-14mol%, such as 8mol%, 8.5mol%, 9mol%, 9.5mol%, 10mol%, 10.5mol%, 11mol%, 11.5mol%, 12mol%, 13mol% or 14mol%; however, the molar percentage is not limited to the listed values, other unlisted values within the numerical range are also applicable; preferably, the molar percentage is 9-12mol%.

The first auxiliary component in the present application is Co₂O₃, and based on a total mass of the main component, the first auxiliary component Co₂O₃ has a content of 0.1-0.4wt%, such as 0.1wt%, 0.15wt%, 0.2wt%, 0.25wt%, 0.3wt%, 0.35wt% or 0.4wt%,; however, the content is not limited to the listed values, other unlisted values within the numerical range are also applicable; preferably, the content is 0.1-0.35wt%.

By the addition of Co₂O₃ with the above mass fraction, the specific content ratio of Fe²⁺ to Co²⁺ in the MnZn power ferrite is adjusted synergistically, so that the final obtained MnZn power ferrite has effectively reduced hysteresis loss without being affected by the temperature change, and the MnZn power ferrite is guaranteed to have low loss over the wide temperature range of 25-120°C.

Based on a total mass of the main component, when the content of Co₂O₃ is out of the range in the present application, the prepared MnZn ferrite will have increased power consumption or decreased strength.

The first auxiliary component in the present application comprises at least three of CaCO₃, Nb₂O₅, V₂O₅ and MoO₃, and typical but non-limiting combinations include a combination of calcium carbonate and niobium oxide, a combination of niobium oxide and vanadium oxide, a combination of vanadium oxide and molybdenum oxide, a combination of calcium titanate, niobium oxide and vanadium oxide, a combination of niobium oxide, vanadium oxide and molybdenum oxide, or a combination of calcium carbonate, niobium oxide, vanadium oxide and molybdenum oxide.

Preferably, based on a total mass of the main component, the second auxiliary component comprises CaCO₃: 0.03-0.07wt%, Nb₂O₅: 0.01-0.04wt%, V₂O₅: 0.02-0.07wt% and MoOs: 0.005-0.03wt%.

Based on a total mass of the main component, CaCO₃ in the second auxiliary component has a content of 0.03-0.07wt%, such as 0.03wt%, 0.035wt%, 0.04wt%, 0.045wt%, 0.048wt%, 0.05wt%, 0.055wt%, 0.06wt%, 0.065wt% or 0.07wt%; however, the content is not limited to the listed values, other unlisted values within the numerical range are also applicable; preferably, the content is 0.035-0.048wt%.

Based on a total mass of the main component, Nb₂O₅ in the second auxiliary component has a content of 0.01-0.04wt%, such as 0.01wt%, 0.015wt%, 0.02wt%, 0.025wt%, 0.03wt%, 0.035wt% or 0.04wt%; however, the content is not limited to the listed values, other unlisted values within the numerical range are also applicable; preferably, the content is 0.02-0.04wt%.

Based on a total mass of the main component, V₂O₅ in the second auxiliary component has a content of 0.02-0.07wt%, such as 0.02wt%, 0.025wt%, 0.03wt%, 0.04wt%, 0.042wt%, 0.045wt%, 0.048wt%, 0.05wt%, 0.055wt%, 0.06wt%, 0.065wt% or 0.07wt%; however, the content is not limited to the listed values, other unlisted values within the numerical range are also applicable; preferably, the content is 0.042-0.07wt%.

Based on a total mass of the main component, MoOs in the second auxiliary component has a content of 0.005-0.03wt%, such as 0.005wt%, 0.01wt%, 0.015wt%, 0.02wt%, 0.025wt% or 0.03wt%; however, the content is not limited to the listed values, other unlisted values within the numerical range are also applicable; preferably, the content is 0.01-0.03wt%.

In a second aspect, embodiments of the present application provide a preparation method for the wide-temperature, low-loss and high-strength MnZn power ferrite according to the first aspect, and the preparation method comprises:
(1) weighing out raw materials of the main component according to a formulation amount, and performing a primary sand milling, a primary spray granulation and pre-sintering on the raw materials of the main component to obtain the pre-sintered material;
(2) weighing out the auxiliary component according to a formulation amount, mixing the same with the pre-sintered material obtained in step (1) to obtain a mixed material, and performing a secondary sand milling to obtain a secondary sand-milled material; and
(3) performing a secondary spray granulation, molding and sintering in sequence on the secondary sand-milled material obtained in step (2) to obtain the wide-temperature, low-loss and high-strength MnZn power ferrite.

The preparation method provided by the present application has a simple process, low production cost and stable process, and can prepare MnZn power ferrite which has low loss over a wide temperature range and high strength characteristics.

Preferably, the primary sand milling in step (1) is performed for 20-60 min, such as 20 min, 25 min, 30 min, 35 min, 40 min, 45 min, 50 min, 55 min or 60 min; however, the time is not limited to the listed values, other unlisted values within the numerical range are also applicable, preferably 40-60 min.

Preferably, for the primary sand milling in step (1), the raw materials of the main component and a solvent have a mass ratio of (1.8-2.2):1, such as 1.8:1, 1.9:1, 2:1, 2.1:1 or 2.2:1; however, the mass ratio is not limited to the listed values, other unlisted values within the numerical range are also applicable.

Preferably, the solvent comprises deionized water.

Preferably, a particle size is 0.6-1.5 µm after the primary sand milling in step (1), such as 0.6 µm, 0.7 µm, 0.8 µm, 0.9 µm, 1.0 µm, 1.1 µm, 1.2 µm, 1.3 µm, 1.4 µm or 1.5 µm; however, the particle size is not limited to the listed values, other unlisted values within the numerical range are also applicable.

The particle size of 0.6-1.5 µm in the present application means that the minimum particle size is more than or equal to 0.6 µm and the maximum particle size is less than or equal to 1.5 µm.

Preferably, a granular material is prepared by the primary granulation in step (1).

Preferably, the pre-sintering in step (1) is performed at 800-1030°C, such as 800°C, 850°C, 900°C, 940°C, 960°C, 980°C, 1000°C, 1010°C, 1020°C or 1030°C; however, the temperature is not limited to the listed values, other unlisted values within the numerical range are also applicable, preferably 960-1020°C.

Preferably, the pre-sintering in step (1) is performed for 3-9 h, such as 3 h, 4 h, 5 h, 6 h, 7 h, 8 h or 9 h; however, the time is not limited to the listed values, other unlisted values within the numerical range are also applicable, preferably 3-6 h.

Preferably, for the secondary sand milling in step (2), the mixed material and a solvent have a mass ratio of 2:(0.9-1.1), such as 2:0.9, 2:0.95, 2:1, 2:1.05 or 2:1.1; however, the mass ratio is not limited to the listed values, other unlisted values within the numerical range are also applicable.

Preferably, the solvent comprises deionized water or distilled water.

Preferably, the secondary sand milling in step (2) is performed for 1-3 h, such as 1 h, 1.5 h, 2 h, 2.5 h or 3 h; however, the time is not limited to the listed values, other unlisted values within the numerical range are also applicable, preferably 2-3 h.

Preferably, the secondary sand milling in step (2) has an average particle size of 1.05-1.30 µm, such as 1.05 µm, 1.10 µm, 1.15 µm, 1.20 µm, 1.25 µm or 1.30 µm; however, the average particle size is not limited to the listed values, other unlisted values within the numerical range are also applicable.

Preferably, the secondary spray granulation in step (3) has a particle size of 50-200 µm, such as 50 µm, 60 µm, 70 µm, 80 µm, 90 µm, 100 µm, 120 µm, 140 µm, 150 µm, 160 µm, 180 µm or 200 µm; however, the particle size is not limited to the listed values, other unlisted values within the numerical range are also applicable; preferably, the particle size is 80-150 µm.

In the present application, the particle size of the secondary granulation being 50-200 µm means that the minimum particle size is more than or equal to 50 µm and the maximum particle size is less than or equal to 200 µm.

For the blank molded in step (3) of the present application, the blank has a height of 20-30 mm, such as 20 mm, 21 mm, 22 mm, 23 mm, 24 mm, 25 mm, 26 mm, 27 mm, 28 mm, 29 mm or 30 mm, and a length is 12-18 mm; however, the height is not limited to the listed values, other unlisted values within the numerical range are also applicable; such as 12 mm, 13 mm, 14 mm, 15 mm, 16 mm, 17 mm or 18 mm; however, the length is not limited to the listed values, other unlisted values within the numerical range are also applicable; the width is 5-10 mm, such as 5 mm, 6 mm, 7 mm, 8 mm, 9 mm or 10 mm; however, the width is not limited to the listed values, other unlisted values within the numerical range are also applicable.

Preferably, the sintering in step (3) is performed at 1290-1360°C, such as 1290°C, 1300°C, 1310°C, 1320°C, 1330°C, 1340°C, 1350°C or 1360°C; however, the temperature is not limited to the listed values, other unlisted values within the numerical range are also applicable, preferably 1300-1360°C.

When the sintering temperature is out of the range of the present application, the prepared MnZn power ferrite will have increased loss or decreased strength.

Preferably, the sintering in step (3) is performed for 28-32 h, such as 28 h, 29 h, 30 h, 31 h or 32 h; however, the time is not limited to the listed values, other unlisted values within the numerical range are also applicable.

The sintering in the present application comprises a heating process and a holding process, and the sintering time refers to the holding time after heating to 1290-1360°C.

Preferably, the sintering in step (3) is performed in a mixed gas environment.

Preferably, the mixed gas comprises oxygen gas and nitrogen gas.

Preferably, the oxygen gas in the mixed gas has a partial pressure of 0.01-1.5% in a densification stage, such as 0.01%, 0.05%, 0.1%, 0.2%, 0.3%, 0.4%, 0.5%, 0.6%, 0.7%, 0.8%, 0.9%, 1.0%, 1.1%, 1.2%, 1.3%, 1.4% or 1.5%; however, the partial pressure is not limited to the listed values, other unlisted values within the numerical range are also applicable; preferably, the partial pressure is 0.05-1.5%.

During the heating process of sintering the present application, the temperature range of 950-1100°C is the densification stage in the sintering process, and by controlling the partial pressure of oxygen gas to be 0.01-1.5% in such densification stage, the comprehensive performance of the prepared MnZn ferrite is excellent, and when the partial pressure of oxygen gas is higher than 1.5%, the prepared MnZn power ferrite will have increased loss and decreased strength.

As a preferred technical solution of the preparation method in the second aspect of the present application, the preparation method comprises:
(1) weighing out raw materials of the main component according to a formulation amount, performing a primary sand milling for 20-60 min to give a particle size of 0.6-1.5 µm, then performing a primary spray granulation to obtain a granular material, and performing pre-sintering at 800-1030°C for 3-9 h to obtain the pre-sintered material;
(2) weighing out the auxiliary component according to a formulation amount, mixing the same with the pre-sintered material obtained in step (1), adding a solvent, and then performing a secondary sand milling for 1-3 h to obtain a secondary sand-milled material with an average particle size of 1.05-1.3 µm; and
(3) performing a secondary spray granulation on the secondary sand-milled material obtained in step (2) to obtain granules with a particle size of 50-200 µm, and performing molding to obtain blanks, and then sintering the blanks at 1290-1360°C to obtain the wide-temperature, low-loss and high-strength MnZn power ferrite; the sintering is performed in a mixed atmosphere of oxygen gas and nitrogen gas, and the oxygen gas in the mixed atmosphere has a partial pressure of 0.01-1.5%.

In a third aspect, examples of the present application provide use of the wide-temperature, low-loss and high-strength MnZn power ferrite according to the first aspect, wherein the wide-temperature, low-loss and high-strength MnZn power ferrite is used in a transformer

The numerical ranges of the present application include not only the listed point values but also any unlisted point values within the numerical ranges; for the space limitation and concision consideration, the specific point values included in the range will not be exhaustively listed in the present application.

Compared with the related art, examples of the present application have the beneficial effects below.

A wide-temperature, low-loss and high-strength MnZn power ferrite is obtained in embodiments of the present application by adjusting the composition and improving the preparation method. The power consumption of the wide-temperature, low-loss and high-strength MnZn power ferrite is less than or equal to 350 mW/cm³ at 25°C and less than or equal to 350 mW/cm³ at 120°C under 100 kHz and 200 mT conditions; the saturation magnetic flux density is more than or equal to 535 mT at 25°C under 1194 A/m and 50 Hz conditions. In the present application, the MnZn power ferrite well satisfies the wide-temperature low-loss and high strength requirements of devices, and the production process has the advantages of low production cost and good process stability.

Other aspects will become apparent upon reading and understanding the detailed description.

### DETAILED DESCRIPTION

The technical solutions of the present application are further described below through specific embodiments. However, the following examples are only simple examples of the present application and do not represent or limit the scope of the rights of the present application, and the protection scope of the present application is defined by the claims.

### Example 1

This example provides a wide-temperature, low-loss and high-strength MnZn power ferrite, which consists of a main component and an auxiliary component; the auxiliary component relative to the main component is 0.49wt% by mass; the main component is Fe₂O₃: 52.5mol%, MnO: 37mol%, ZnO: 10.5mol%; the auxiliary component is divided into a first auxiliary component and a second auxiliary component; based on a total mass of the main component, the first auxiliary component is Co₂O₃: 0.35wt%, and the second auxiliary component is CaCO₃: 0.04wt%, Nb₂O₅: 0.03wt%, V₂O₅: 0.05wt%, MoO₃: 0.02wt%.

A preparation method for the wide-temperature, low-loss and high-strength MnZn power ferrite comprises the following steps:
(1) raw materials of the main component were weighed out according to a formulation amount, subjected to a primary sand milling for 50 min to give a particle size of 0.6-1.5 µm, then subjected to a primary spray granulation to obtain a granular material, and pre-sintered at 990°C for 5 h to obtain a pre-sintered material;
(2) the auxiliary component was weighed out according to a formulation amount, mixed with the pre-sintered material obtained in step (1) and added with a solvent, and then subjected to a secondary sand milling for 2 h to obtain a secondary sand-milled material with an average particle size of 1.15 µm; and
(3) the secondary sand-milled material obtained in step (2) was subjected to a secondary spray granulation to obtain granules with an average particle size of 100 µm, molded into blanks (H25×15×8), and then sintered at 1320°C to obtain the wide-temperature, low-loss and high-strength MnZn power ferrite; the sintering was performed in a mixed atmosphere of oxygen gas and nitrogen gas, and the oxygen gas in the mixed atmosphere had a partial pressure of 0.5%.

### Example 2

This example provides a wide-temperature, low-loss and high-strength MnZn power ferrite, which consists of a main component and an auxiliary component; the auxiliary component relative to the main component is 0.407wt% by mass; the main component is Fe₂O₃: 52mol%, MnO: 36mol%, ZnO: 12mol%; the auxiliary component is divided into a first auxiliary component and a second auxiliary component; based on a total mass of the main component, the first auxiliary component is Co₂O₃: 0.3wt%, and the second auxiliary component is CaCO₃: 0.035wt%, Nb₂O₅: 0.02wt%, V₂O₅: 0.042wt%, MoOs: 0.01wt%.

A preparation method for the wide-temperature, low-loss and high-strength MnZn power ferrite comprises the following steps:
(1) raw materials of the main component were weighed out according to a formulation amount, subjected to a primary sand milling for 40 min to give a particle size of 0.6-1.5 µm, then subjected to a primary spray granulation to obtain a granular material, and pre-sintered at 960°C for 6 h to obtain a pre-sintered material;
(2) the auxiliary component was weighed out according to a formulation amount, mixed with the pre-sintered material obtained in step (1) and added with a solvent, and then subjected to a secondary sand milling for 1.5 h to obtain a secondary sand-milled material with an average particle size of 1.1 µm; and
(3) the secondary sand-milled material obtained in step (2) was subjected to a secondary spray granulation to obtain granules with an average particle size of 80 µm, molded into blanks (H25×15×8), and then sintered at 1300°C to obtain the wide-temperature, low-loss and high-strength MnZn power ferrite; the sintering was performed in a mixed atmosphere of oxygen gas and nitrogen gas, and the oxygen gas in the mixed atmosphere had a partial pressure of 0.05%.

### Example 3

This example provides a wide-temperature, low-loss and high-strength MnZn power ferrite, which consists of a main component and an auxiliary component; the auxiliary component relative to the main component is 0.538wt% by mass; the main component is Fe₂O₃: 53mol%, MnO: 37.5mol%, ZnO: 9.5mol%; the auxiliary component is divided into a first auxiliary component and a second auxiliary component; based on a total mass of the main component, the first auxiliary component is Co₂O₃: 0.37wt%, and the second auxiliary component is CaCO₃: 0.048wt%, Nb₂O₅: 0.035wt%, V₂O₅: 0.06wt%, MoO₃: 0.025wt%.

A preparation method for the wide-temperature, low-loss and high-strength MnZn power ferrite comprises the following steps:
(1) raw materials of the main component were weighed out according to a formulation amount, subjected to a primary sand milling for 55 min to give a particle size of 0.6-1.5 µm, then subjected to a primary spray granulation to obtain a granular material, and pre-sintered at 1020°C for 4 h to obtain a pre-sintered material;
(2) the auxiliary component was weighed out according to a formulation amount, mixed with the pre-sintered material obtained in step (1) and added with a solvent, and then subjected to a secondary sand milling for 2.5 h to obtain a secondary sand-milled material with an average particle size of 1.2 µm; and
(3) the secondary sand-milled material obtained in step (2) was subjected to a secondary spray granulation to obtain granules with an average particle size of 150 µm, molded into blanks (H25×15×8), and then sintered at 1360°C to obtain the wide-temperature, low-loss and high-strength MnZn power ferrite; the sintering was performed in a mixed atmosphere of oxygen gas and nitrogen gas, and the oxygen gas in the mixed atmosphere had a partial pressure of 1%.

### Example 4

This example provides a wide-temperature, low-loss and high-strength MnZn power ferrite, which consists of a main component and an auxiliary component; the auxiliary component relative to the main component is 0.61wt% by mass; the main component is Fe₂O₃: 54mol%, MnO: 38mol%, ZnO: 8mol%; the auxiliary component is divided into a first auxiliary component and a second auxiliary component; based on a total mass of the main component, the first auxiliary component is Co₂O₃: 0.4wt%, and the second auxiliary component is CaCO₃: 0.07wt%, Nb₂O₅: 0.04wt%, V₂O₅: 0.07wt%, MoOs: 0.03wt%.

A preparation method for the wide-temperature, low-loss and high-strength MnZn power ferrite comprises the following steps:
(1) raw materials of the main component were weighed out according to a formulation amount, subjected to a primary sand milling for 60 min to give a particle size of 0.6-1.5 µm, then subjected to a primary spray granulation to obtain a granular material, and pre-sintered at 1030°C for 3 h to obtain a pre-sintered material;
(2) the auxiliary component was weighed out according to a formulation amount, mixed with the pre-sintered material obtained in step (1) and added with a solvent, and then subjected to a secondary sand milling for 3 h to obtain a secondary sand-milled material with an average particle size of 1.3 µm; and
(3) the secondary sand-milled material obtained in step (2) was subjected to a secondary spray granulation to obtain granules with an average particle size of 200 µm, molded into blanks (H30×18×10), and then sintered at 1360°C to obtain the wide-temperature, low-loss and high-strength MnZn power ferrite; the sintering was performed in a mixed atmosphere of oxygen gas and nitrogen gas, and the oxygen gas in the mixed atmosphere had a partial pressure of 1.5%.

### Example 5

This example provides a wide-temperature, low-loss and high-strength MnZn power ferrite, which has the same components and contents as Example 1 except that based on a mass of the main component, the content of Co₂O₃ in the first auxiliary component is 0.36wt% of the main component, and the mass of the auxiliary component is 0.5wt% of the main component.

A preparation method for the wide-temperature, low-loss and high-strength MnZn power ferrite has the same process parameters as Example 1.

### Example 6

This example provides a wide-temperature, low-loss and high-strength MnZn power ferrite, which has the same components and contents as Example 1 except that based on a mass of the main component, the content of Co₂O₃ in the first auxiliary component is 0.3wt% of the main component, and the mass of the auxiliary component is 0.44wt% of the main component.

A preparation method for the wide-temperature, low-loss and high-strength MnZn power ferrite has the same process parameters as Example 1.

### Example 7

This example provides a wide-temperature, low-loss and high-strength MnZn power ferrite, which has the same components and contents as Example 1 except that based on a mass of the main component, the content of V₂O₅ in the second auxiliary component is 0.04wt% of the main component, and the mass of the auxiliary component is 0.54wt% of the main component.

A preparation method for the wide-temperature, low-loss and high-strength MnZn power ferrite has the same process parameters as Example 1.

### Example 8

This example provides a wide-temperature, low-loss and high-strength MnZn power ferrite, which has the same components and contents as Example 1 except that based on a mass of the main component, the content of V₂O₅ in the second auxiliary component is 0.075wt% of the main component, and the mass of the auxiliary component is 0.465wt% of the main component.

A preparation method for the wide-temperature, low-loss and high-strength MnZn power ferrite has the same process parameters as Example 1.

### Example 9

This example provides a wide-temperature, low-loss and high-strength MnZn power ferrite, which has the same components and contents as Example 1 except that based on a mass of the main component, the content of MoOs in the second auxiliary component is 0.005wt% of the main component, and the mass of the auxiliary component is 0.475wt% of the main component.

A preparation method for the wide-temperature, low-loss and high-strength MnZn power ferrite has the same process parameters as Example 1.

### Example 10

This example provides a wide-temperature, low-loss and high-strength MnZn power ferrite, which has the same components and contents as Example 1 except that based on a mass of the main component, the content of MoOs in the second auxiliary component is 0.035wt% of the main component, and the mass of the auxiliary component is 0.455wt% of the main component.

A preparation method for the wide-temperature, low-loss and high-strength MnZn power ferrite has the same process parameters as Example 1.

### Example 11

This example provides a wide-temperature, low-loss and high-strength MnZn power ferrite, which has the same components as Example 1.

A preparation method for the wide-temperature, low-loss and high-strength MnZn power ferrite has the same process parameters as Example 1 except that the sintering has a temperature of 1250°C.

### Example 12

This example provides a wide-temperature, low-loss and high-strength MnZn power ferrite, which has the same components as Example 1.

A preparation method for the wide-temperature, low-loss and high-strength MnZn power ferrite has the same process parameters as Example 1 except that the sintering has a temperature of 1390°C.

### Example 13

This example provides a wide-temperature, low-loss and high-strength MnZn power ferrite, which has the same components as Example 1.

A preparation method for the wide-temperature, low-loss and high-strength MnZn power ferrite has the same process parameters as Example 1 except that the partial pressure of the oxygen gas is 2%.

### Example 14

This example provides a wide-temperature, low-loss and high-strength MnZn power ferrite, which has the same components as Example 1.

A preparation method for the wide-temperature, low-loss and high-strength MnZn power ferrite has the same process parameters as Example 1 except that the partial pressure of the oxygen gas is 4%.

### Comparative Example 1

This comparative example provides a wide-temperature, low-loss and high-strength MnZn power ferrite, which has the same components and contents as Example 1 except that based on a mass of the main component, the content of Co₂O₃ in the first auxiliary component is 0.45wt% of the main component, and the mass of the auxiliary component is 0.59wt% of the main component.

A preparation method for the wide-temperature, low-loss and high-strength MnZn power ferrite has the same process parameters as Example 1.

### Comparative Example 2

This comparative example provides a wide-temperature, low-loss and high-strength MnZn power ferrite, which has the same components and contents as Example 1 except that Co₂O₃ in the first auxiliary component is not contained, and the auxiliary component relative to the main component is 0.14wt% by mass.

A preparation method for the wide-temperature, low-loss and high-strength MnZn power ferrite has the same process parameters as Example 1.

### Comparative Example 3

This comparative example provides a wide-temperature, low-loss and high-strength MnZn power ferrite, which has the same components and contents as Example 1 except that Co₂O₃ is replaced by an equal mass of Ni₂O₃.

A preparation method for the wide-temperature, low-loss and high-strength MnZn power ferrite has the same process parameters as Example 1.

### Comparative Example 4

This comparative example provides a wide-temperature, low-loss and high-strength MnZn power ferrite, which has the same components and contents as Example 1 except that V₂O₅ is replaced by an equal mass of Cr₂O₃.

A preparation method for the wide-temperature, low-loss and high-strength MnZn power ferrite has the same process parameters as Example 1.

### Comparative Example 5

This comparative example provides a wide-temperature, low-loss and high-strength MnZn power ferrite, which has the same components and contents as Example 1 except that MoOs is replaced by an equal mass of Co₂O₃.

A preparation method for the wide-temperature, low-loss and high-strength MnZn power ferrite has the same process parameters as Example 1.

The wide-temperature, low-loss and high-strength MnZn power ferrites provided by Examples 1-14 and Comparative Examples 1-5 are tested by an X-ray fluorescence analyzer, the result of which shows that the composition of the ferrite is consistent with the composition of the raw materials, and tested for saturation magnetic flux density (Bs), power consumption, and strength. The saturation magnetic flux density of the wide-temperature, low-loss and high-strength MnZn power ferrite is tested at 50 Hz and 1194 A/m by using an IWATSU-8258 AC B-H analyzer. The power consumption of the ferrite is tested at 100 kHz, 200 mT by using an IWATSU-8218 AC B-H analyzer. The strength of the ferrite is tested under M method conditions at 20 mm/min by using an NK-500 strength tester; the results obtained are shown in Table 1.

**Table 1**

| Experiment No. | Bs (mT) | Power consumption (25°C) (mW/cm³) | Power consumption (60°C) (mW/cm³) | Power consumption (120°C) (mW/cm³) | Strength (N) |
|---|---|---|---|---|---|
| Example 1 | 542 | 335 | 304 | 338 | 115 |
| Example 2 | 538 | 348 | 315 | 340 | 100 |
| Example 3 | 545 | 342 | 305 | 358 | 109 |
| Example 4 | 542 | 338 | 307 | 443 | 110 |
| Example 5 | 540 | 339 | 306 | 340 | 111 |
| Example 6 | 540 | 345 | 308 | 346 | 98 |
| Example 7 | 543 | 338 | 304 | 341 | 90 |
| Example 8 | 540 | 356 | 325 | 368 | 114 |
| Example 9 | 547 | 356 | 318 | 368 | 108 |
| Example 10 | 545 | 352 | 320 | 386 | 111 |
| Example 11 | 527 | 389 | 336 | 412 | 86 |
| Example 12 | 544 | 402 | 346 | 425 | 95 |
| Example 13 | 542 | 425 | 356 | 429 | 105 |
| Example 14 | 542 | 456 | 365 | 459 | 108 |
| Comparative Example 1 | 541 | 340 | 318 | 359 | 96 |
| Comparative Example 2 | 537 | 598 | 502 | 398 | 105 |
| Comparative Example 3 | 540 | 658 | 550 | 386 | 99 |
| Comparative Example 4 | 541 | 357 | 315 | 338 | 85 |
| Comparative Example 5 | 540 | 356 | 317 | 348 | 103 |

As can be seen from Examples 1-4 in Table 1, the preparation method for a wide-temperature, low-loss and high-strength MnZn power ferrite provided by the present application can give a wide-temperature, low-loss and high-strength MnZn power ferrite which has low consumption of 336 mW/cm³ or less over the range of 25-120°C and a high strength of 102 N or more.

As can be seen from the comparison of Examples 5-6 with Example 1, the wide-temperature, low-loss and high-strength MnZn power ferrite prepared in Example 5 has a similar performance to that of Example 1, and the wide-temperature, low-loss and high-strength MnZn power ferrite prepared in Example 6 has an inferior performance to that of Example 1; when the content of the auxiliary component Co₂O₃ is out of the preferred range of 0.35-0.4wt%, the power consumption will increase and the strength will decrease.

As can be seen from the comparison of Examples 7-8 with Example 1, when the content of the auxiliary component V₂O₅ is out of the preferred range of 0.042-0.07wt%, the resulting wide-temperature, low-loss and high-strength MnZn power ferrite will have increased power consumption and decreased strength.

As can be seen from the comparison of Examples 9-10 with Example 1, the wide-temperature, low-loss and high-strength MnZn power ferrites prepared in Examples 9-10 have an inferior performance to that of Example 1; the preferred additive amount of the auxiliary component MoOs is 0.01-0.03wt% of the main component, and when the additive amount of MoOs is out of the range, the resulting wide-temperature, low-loss and high-strength MnZn power ferrite will have increased power consumption and decreased strength.

As can be seen from the comparison of Examples 11-12 and Example 1, the wide-temperature, low-loss and high-strength MnZn power ferrite prepared in Example 11 has higher power consumption and lower strength then Example 1, and the wide-temperature, low-loss and high-strength MnZn power ferrite prepared in Example 12 has lower strength than Example 1; when the sintering temperature is out of the preferred range of 1290-1360°C, the resulting wide-temperature, low-loss and high-strength MnZn power ferrite will have increased power consumption and decreased strength.

As can be seen from the comparison of Examples 13-14 with Example 1, the wide-temperature, low-loss and high-strength MnZn power ferrites prepared in Examples 13-14 have an inferior performance to that of Example 1, which indicates that when the partial pressure of the oxygen gas is out of the preferred range of 0.01-1.5%, the resulting wide-temperature, low-loss and high-strength MnZn power ferrite will have increased power consumption and decreased strength.

As can be seen from the comparison of Comparative Examples 1-3 with Example 1, the wide-temperature, low-loss and high-strength MnZn power ferrites prepared in Comparative Examples 1-3 have an far inferior performance to that of Example 1, and the performance of Comparative Examples 2-3 is inferior to Comparative Example 1; Co₂O₃ in the auxiliary component needs to be controlled to be 0.1-0.4wt% of the main composition, preferably 0.1-0.35wt%. Meanwhile, when Co₂O₃ is not added to the auxiliary component, the resulting wide-temperature, low-loss and high-strength MnZn power ferrite has the worst performance.

As can be seen from the comparison of Comparative Examples 4-5 with Example 1, in the auxiliary component, V and Mo have a synergistic effect with Co, Ca or Nb, and when V or Mo is replaced by an equal mass of other elements, the resulting wide-temperature, low-loss and high-strength MnZn power ferrite will have reduced performance.

In conclusion, for the wide-temperature, low-loss and high-strength MnZn power ferrite in the present application, by the addition of auxiliary components in the specific contents and their synergistic effect, under 100 kHz and 200 mT conditions, the power consumption at 25°C is less than or equal to 350 mW/cm³, and the ferrite has low loss over a wide temperature rang of 25-120°C and high magnetic flux density; under 1194 A/m and 50 Hz conditions, the saturation magnetic flux density at 25°C is more than or equal to 535 mT; the strength is increased by more than 10%; the wide-temperature, low-loss and high-strength MnZn power ferrite satisfies the wide-temperature low-loss and high-strength requirements of the automotive electronics.

The detailed structural features of the present application are illustrated through the above examples in the present application, but the present application is not limited to the above detailed structural features, which means that the present application is not necessarily relied on the above detailed structural features to be implemented. It should be clear to those skilled in the art that any improvement of the present application, equivalent replacement of the selected components of the present application, addition of auxiliary components, selection of specific methods, etc., shall fall within the protection and disclosure scope of the present application.

## Claims

1. A wide-temperature, low-loss and high-strength MnZn power ferrite, which consists of a main component and an auxiliary component;
the auxiliary component relative to the main component is 0.165-0.61wt% by mass;
by molar percentage, the main component comprises:
| | |
|---|---|
| Fe₂O₃ | 51-54mol% |
| MnO | 35-38mol% |
| ZnO | 8-14mol%; |
the auxiliary component comprises a first auxiliary component and a second auxiliary component; based on a total mass of the main component, the first auxiliary component is Co₂O₃: 0.1-0.4wt%; and the second auxiliary component comprises at least three of CaCOs, Nb₂O₅, V₂O₅ and MoOs.

2. The wide-temperature, low-loss and high-strength MnZn power ferrite according to claim 1, wherein by molar percentage, the main component comprises:
| | |
|---|---|
| Fe₂O₃ | 52-53mol% |
| MnO | 36-38mol% |
| ZnO | 9-12mol%. |

3. The wide-temperature, low-loss and high-strength MnZn power ferrite according to claim 1 or 2, wherein based on a total mass of the main component, the second auxiliary component comprises:
| | |
|---|---|
| CaCO₃ | 0.03-0.07wt% |
| Nb₂O₅ | 0.01-0.04wt% |
| V₂O₅ | 0.02-0.07wt% |
| MoO₃ | 0.005-0.03wt% |

4. The wide-temperature, low-loss and high-strength MnZn power ferrite according to any one of claims 1 to 3, wherein based on a total mass of the main component, the auxiliary component comprises:
| | |
|---|---|
| CaCO₃ | 0.035-0.048wt% |
| Nb₂O₅ | 0.02-0.04wt% |
| V₂O₅ | 0.042-0.07wt% |
| MoOs | 0.01-0.03wt% |
| Co₂O₃ | 0.35-0.4wt%. |

5. A preparation method for the wide-temperature, low-loss and high-strength MnZn power ferrite according to any one of claims 1 to 4, comprising:
(1) weighing out raw materials of the main component according to a formulation amount, and performing a primary sand milling, a primary spray granulation and pre-sintering on the raw materials of the main component to obtain the pre-sintered material;
(2) weighing out the auxiliary component according to a formulation amount, mixing the same with the pre-sintered material obtained in step (1) to obtain a mixed material, and performing a secondary sand milling to obtain a secondary sand-milled material; and
(3) performing a secondary spray granulation, molding and sintering in sequence on the secondary sand-milled material obtained in step (2) to obtain the wide-temperature, low-loss and high-strength MnZn power ferrite.

6. The preparation method according to claim 5, wherein the primary sand milling in step (1) is performed for 20-60 min, preferably 40-60 min.

7. The preparation method according to claim 5 or 6, wherein for the primary sand milling in step (1), the raw materials of the main component and a solvent have a mass ratio of (1.8-2.2): 1.

8. The preparation method according to any one of claims 5 to 7, wherein the solvent comprises deionized water.

9. The preparation method according to any one of claims 5 to 8, wherein a particle size is 0.6-1.5 µm after the primary sand milling in step (1);
preferably, a granular material is prepared by the primary spray granulation in step (1).

10. The preparation method according to any one of claims 5 to 9, wherein the pre-sintering in step (1) is performed at 800-1030°C, preferably 960-1020°C;
preferably, the pre-sintering in step (1) has a time of 3-9 h, preferably 3-6 h.

11. The preparation method according to any one of claims 5 to 10, wherein for the secondary sand milling in step (2), the mixed material and a solvent have a mass ratio of 2:(0.9-1.1);
preferably, the solvent comprises deionized water or distilled water;
preferably, the secondary sand milling in step (2) is performed for 1-3 h, preferably 2-3 h;
preferably, the secondary sand milling in step (2) has an average particle size of 1.05-1.30 µm.

12. The preparation method according to any one of claims 5 to 11, wherein the secondary spray granulation in step (3) has an average particle size of 50-200 µm, preferably 80-150 µm;
preferably, the sintering in step (3) is performed at 1290-1360°C, preferably 1300-1360°C;
preferably, the sintering in step (3) is performed for 28-32 h;
preferably, the sintering in step (3) is performed in a mixed gas environment;
preferably, the mixed gas comprises oxygen gas and nitrogen gas;
preferably, the oxygen gas in the mixed gas has a partial pressure of 0.01-1.5% in a densification stage, preferably 0.05-1.5%.

13. The preparation method according to any one of claims 5 to 12, comprising:
(1) weighing out raw materials of the main component according to a formulation amount, performing a primary sand milling for 20-60 min to give a particle size of 0.6-1.5 µm, then performing a primary spray granulation to obtain a granular material, and performing pre-sintering at 800-1030°C for 3-9 h to obtain the pre-sintered material;
(2) weighing out the auxiliary component according to a formulation amount, mixing the same with the pre-sintered material obtained in step (1), adding a solvent, and then performing a secondary sand milling for 1-3 h to obtain a secondary sand-milled material with an average particle size of 1.05-1.30 µm; and
(3) performing a secondary spray granulation on the secondary sand-milled material obtained in step (2) to obtain granules with an average particle size of 50-200 µm, and performing molding and then sintering at 1290-1360°C to obtain the wide-temperature, low-loss and high-strength MnZn power ferrite; the sintering is performed in a mixed atmosphere of oxygen gas and nitrogen gas, and the oxygen gas in the mixed atmosphere has a partial pressure of 0.01-1.5%.

14. Use of the wide-temperature, low-loss and high-strength MnZn power ferrite according to any one of claims 1 to 4, wherein the wide-temperature, low-loss and high-strength MnZn power ferrite is used in a transformer.
